# EUROPEAN PATENT APPLICATION

(11) **EP 2 334 087 A2**
(43) Date of publication of application: **15.06.2011**
(21) Application number: 10174460.5
(22) Date of filing: 30.08.2010
(51) Int. Cl.: H04N 13/00

(54) **Method for displaying broadcasting data and corresponding mobile terminal**

(30) Priority: 07.12.2009 KR 20090120809
(71) Applicant: LG ELECTRONICS INC., Yeongdeungpo-gu Seoul 150-721 (KR)
(72) Inventor: Kim, Jonghwan, 153-801, Seoul (KR)
(74) Representative: Cabinet Plasseraud

(57) **Abstract**

A method for displaying broadcasting data and a mobile terminal thereof are discussed, wherein the method includes according to an embodiment: receiving broadcasting data and displaying the broadcasting data on a display of a mobile terminal, turning on a switching panel unit mounted on the display and displaying the broadcasting data in a 3-D image; generating a first proximity signal through a proximity sensor of the mobile terminal to enter a broadcasting data display change preparatory step; and changing the display of the broadcasting data responsive to a user detection signal generated by the proximity sensor or a touch sensor of the mobile terminal.

## Description

### FIELD OF THE INVENTION

The present disclosure relates to a method for displaying a 3-D imaged broadcasting data and a mobile terminal thereof.

### BACKGROUND OF THE INVENTION

Generally, terminals can be classified into mobile/portable terminals and stationary terminals. The mobile terminals can be further classified into handheld terminals and vehicle mount terminals according to possibility of user's direct portability.

As functions of the terminal have diversified, the terminal have been implemented as a multimedia player provided with composite functions such as photographing of photos or moving pictures, playback of music or moving picture files, game play, broadcast reception and the like, for example.

To implement various complex functions in the multimedia player, improvement of structural parts and/or software parts of the terminal have been considered. Recent multimedia mobile terminals as have been improved to have various functions, in addition to the intrinsic communicating functions.

Recently, a mobile terminal capable of receiving broadcasting has been developed, and moreover, a mobile terminal capable of receiving a 3-D (dimensional) broadcasting has been developed.

### SUMMARY OF THE INVENTION

It is an object of the present disclosure to provide a method for displaying broadcasting data and a mobile terminal thereof. The method includes changing display of broadcasting data to allow a user to conveniently check a desired screen by using a proximity signal received through a proximity sensor while the broadcasting data is being received.

In one general aspect of the present disclosure, there is a method for displaying 3-D broadcasting data. The method includes: receiving broadcasting data and displaying the broadcasting data on a display of a mobile terminal, turning on a switching panel unit mounted on the display and displaying the broadcasting data in a 3-D image; generating a first proximity signal when an objet is sensed within a predetermined distance from the mobile terminal by a proximity sensor of the mobile terminal; and changing the display of the broadcasting data responsive to a predetermined user detection signal generated by the proximity sensor or a touch sensor of the mobile terminal.

In some exemplary embodiments, the step of generating a first proximity signal through a proximity sensor of the mobile terminal to enter a broadcasting data display change preparatory step may include generating a first proximity when a pointing device is sensed in a position within a critical distance from the proximity sensor for over a predetermined time.

In some exemplary embodiments, the method may further include displaying an event-notifying icon in a 3-D image if an event occurs.

In some exemplary embodiments, the method may further include changing the broadcasting data in a 2-D image and displaying the 2-D image if the event occurs.

In some exemplary embodiments, the icon may be an indicator icon.

In some exemplary embodiments, the method may further include displaying a control menu of the broadcasting data on the display in 3-D image on the display if a second proximity signal is generated by the proximity sensor.

In some exemplary embodiments, the method may further include controlling the broadcasting data responsive to a direct touch signal of the control menu.

In some exemplary embodiments, the method may further include displaying a message of the event in a 3-D image and changing the broadcasting data in a 2-D image and display the 2-D image if a function event of the mobile terminal occurs.

In another general aspect of the present disclosure, there is a mobile terminal that includes: a wireless communication unit configured to receive a 3-D imaged broadcasting data; a display configured to display the broadcasting data; a switching panel arranged on the display; a proximity sensor configured to generated a first proximity signal if a pointing device is positioned within a critical distance; and controller configured to controllably display the broadcasting data on the display, to turn on the switching panel to display the broadcasting data in 3-D image, and to enter a broadcasting data display change preparatory step and to change the display of the broadcasting data responsive to a user detection signal, if a first proximity signal is generated by the proximity sensor display.

In some exemplary embodiments, the display may be a touch screen.

In some exemplary embodiments, the user detection signal may be generated by the proximity sensor or the touch screen.

In some exemplary embodiments, the user detection signal may be generated by a multiple touch operation on the proximity sensor or the touch screen.

In some exemplary embodiments, the first proximity signal is generated by the pointing device being positioned within a critical distance from the proximity sensor for over a predetermined time.

In some exemplary embodiments, the controller may control the display to allow an event-notifying icon in a 3-D image if an event occurs.

In some exemplary embodiments, the controller may control the display to allow the broadcasting data to be changed to a 2-D image if an event occurs.

In some exemplary embodiments, the icon may be an indicator icon.

In some exemplary embodiments, the controller may control the display to allow a control menu of the broadcasting data to be displayed in a 3-D image if a second proximity signal is generated by the proximity sensor.

In some exemplary embodiments, the controller may recognize an object included in the broadcasting data and change the display of the object responsive to a user selection signal.

In some exemplary embodiments, the controller may control a 3-D depth of the object included in the broadcasting data responsive to a user set-up.

### BRIEF DESCRIPTION OF THE DRAWINGS

The accompanying drawings, which are included to provide a further understanding of the disclosure and are incorporated in and constitute a part of this application, illustrate embodiment(s) of the disclosure and together with the description serve to explain the principle of the disclosure. In the drawings:

FIG. 1 is a block diagram of a mobile terminal according to an exemplary embodiment of the present disclosure;

FIG. 2a is a front perspective view of a mobile terminal according to an exemplary embodiment of the present disclosure;

FIG. 2b is a rear perspective view of a mobile terminal according to an exemplary embodiment of the present disclosure;

FIGS. 3a and 3b are front views of a mobile terminal for describing an operation status of the mobile terminal according to the present disclosure;

FIG. 4 is a schematic conceptual view for explaining a proximity depth of a proximity sensor;

FIG. 5 is a schematic view explaining a principle of a 3-D image display method using binocular disparity according to an exemplary embodiment of the present disclosure;

FIG. 6 is a flowchart for describing a method for displaying a 3-D imaged broadcasting data in a mobile terminal according to a first exemplary embodiment of the present disclosure;

FIG. 7 is a flowchart for describing a method for displaying a 3-D imaged broadcasting data in a mobile terminal according to a second exemplary embodiment of the present disclosure;

FIG. 8 is a flowchart for describing a method for displaying a 3-D imaged broadcasting data in a mobile terminal according to a third exemplary embodiment of the present disclosure;

FIGS. 9a ~ 9d are image views explaining a first example of a mobile terminal for describing a method for displaying a 3-D imaged broadcasting data in the mobile terminal according to an exemplary embodiment of the present disclosure;

FIGS. 10a ~ 10c are image views explaining a second example of a mobile terminal for describing a method for displaying a 3-D imaged broadcasting data in the mobile terminal according to an exemplary embodiment of the present disclosure;

FIGS. 11a ~ 11b are image views explaining a third example of a mobile terminal for describing a method for displaying a 3-D imaged broadcasting data in the mobile terminal according to an exemplary embodiment of the present disclosure;

FIGS. 12a ~ 12b are image views explaining a fourth example of a mobile terminal for describing a method for displaying a 3-D imaged broadcasting data in the mobile terminal according to an exemplary embodiment of the present disclosure;

FIGS. 13a ~ 13c are image views explaining a fifth example of a mobile terminal for describing a method for displaying a 3-D imaged broadcasting data in the mobile terminal according to an exemplary embodiment of the present disclosure;

FIGS. 14a ~ 14d are image views explaining a sixth example of a mobile terminal for describing a method for displaying a 3-D imaged broadcasting data in the mobile terminal according to an exemplary embodiment of the present disclosure; and

FIGS. 15a ~ 15b are image views explaining a seventh example of a mobile terminal for describing a method for displaying a 3-D imaged broadcasting data in the mobile terminal according to an exemplary embodiment of the present disclosure.

### DETAILED DESCRIPTION OF THE INVENTION

A mobile terminal according to the present disclosure will be described in detail with reference to the accompanying drawings.

The suffixes 'module', 'unit' and 'part' may be used for elements in order to facilitate the disclosure. Significant meanings or roles may not be given to the suffixes themselves and it is understood that the 'module', 'unit' and 'part' may be used together or interchangeably.

Embodiments of the present disclosure may be applicable to various types of terminals. Examples of such terminals may include mobile terminals as well as stationary terminals, such as mobile phones, user equipment, smart phones, digital television (DTV), computers, digital broadcast terminals, personal digital assistants, portable multimedia players (PMP) and/or navigators.

A further description may be provided with regard to a mobile terminal, although such teachings may apply equally to other types of terminals such as stationary terminals that include digital TVs and desktop computers, the details of which are well known to the skilled in the art.

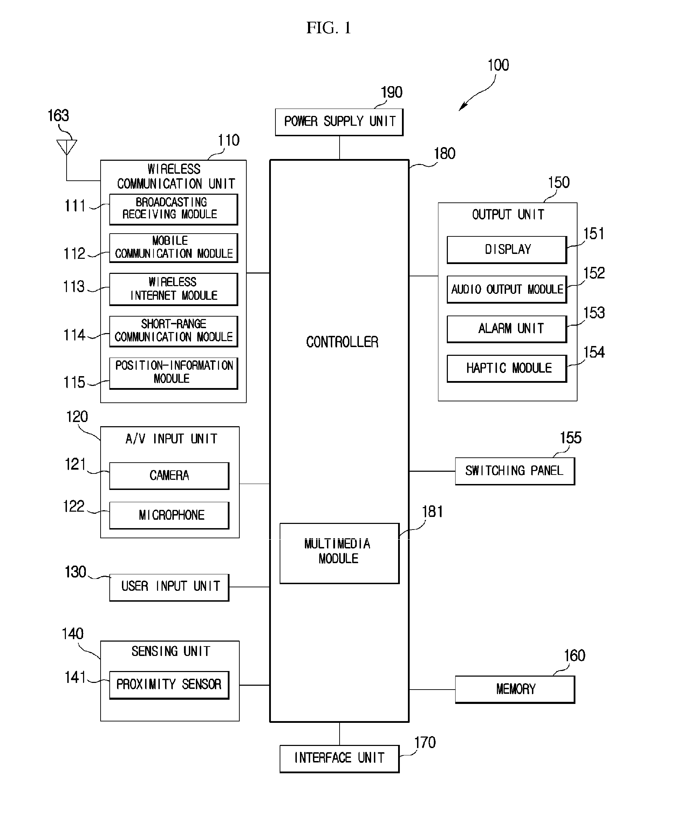

FIG. 1 is a block diagram of a mobile terminal in accordance with an example embodiment. Other embodiments and arrangements may also be provided. FIG. 1 shows a mobile terminal 100 having various components, although other components may also be used. More or fewer components may alternatively be implemented.

FIG. 1 shows that the mobile terminal 100 includes a wireless communication unit 110, an audio/video (A/V) input unit 120, a user input unit 130, a sensing unit 140, an output unit 150, a memory 160, an interface unit 170, a controller 180 and a power supply unit 190.

The wireless communication unit 110 may be configured with several components and/or modules. The wireless communication unit 110 may include a broadcast receiving module 111, a mobile communication module 112, a wireless Internet module 113, a short-range communication module 114 and a position-location module 115. The wireless communication unit 110 may include one or more components that permit wireless communication between the mobile terminal 100 and a wireless communication system or a network within which the mobile terminal 100 is located.

In case of non-mobile terminals, the wireless communication unit 110 may be replaced with a wire communication unit. The wireless communication unit 110 and the wire communication unit may be commonly referred to as a communication unit.

The broadcast receiving module 111 may receive a broadcast signal and/or broadcast associated information from an external broadcast managing server via a broadcast channel.

The broadcast channel may include a satellite channel and a terrestrial channel. The broadcast managing server may refer to a system that transmits a broadcast signal and/or broadcast associated information to a mobile terminal. The broadcasting signal may include not only a TV broadcasting signal, a radio signal, a data broadcasting signal, but also a broadcasting signal in which a TV broadcasting signal or a radio signal is combined with a data broadcasting signal.

Examples of broadcast associated information may include information associated with a broadcast channel, a broadcast program, a broadcast service provider, etc. The broadcast associated information may be provided through a mobile terminal. In this case, the broadcast associated information may be received by the mobile communication module 112.

For example, broadcast associated information may include an electronic program guide (EPG) of digital multimedia broadcasting (DMB) and an electronic service guide (ESG) of digital video broadcast-handheld (DVB-H).

The broadcast receiving module 111 may receive broadcast signals transmitted from various types of broadcast systems. As a non-limiting example, the broadcasting systems may include digital multimedia broadcasting-terrestrial (DMB-T), digital multimedia broadcasting-satellite (DMB-S), digital video broadcast-handheld (DVB-H), a data broadcasting system known as media forward link only (MediaFLO®) and integrated services digital broadcast-terrestrial (ISDB-T). The receiving of multicast signals may also be provided. Data received by the broadcast receiving module 111 may be stored in the memory 160, for example.

The mobile communication module 112 may communicate wireless signals with one or more network entities (e.g. a base station, an external terminal, a server). The signals may represent audio, video, multimedia, control signaling, and data, etc.

The wireless Internet module 113 may support Internet access for the mobile terminal 100. This wireless Internet module 113 may be internally or externally coupled to the mobile terminal 100. Suitable technologies for wireless Internet may include, but are not limited to, WLAN (Wireless LAN) (Wi-Fi), Wibro (Wireless broadband), Wimax (World Interoperability for Microwave Access), and/or HSDPA (High Speed Downlink Packet Access). The wireless Internet module 113 may be replaced with a wire Internet module in non-mobile terminals. The wireless Internet module 113 and the wire Internet module may be referred to as an Internet module.

The short-range communication module 114 is a module that may facilitate short-range communications. Suitable technologies for short-range communication may include, but are not limited to, radio frequency identification (RFID), infrared data association (IrDA), ultra-wideband (UWB), as well as networking technologies such as Bluetooth and ZigBee.

The position-location module 115 may identify or otherwise obtain a location of the mobile terminal 100. The position-location module 115 may be provided using global positioning system (GPS) components that cooperate with associated satellites, network components, and/or combinations thereof.

The position-location module 115 may precisely calculate current 3-D (3-dimensional) position information based on longitude, latitude and altitude by calculating distance information and precise time information from at least three satellites and then by applying triangulation to the calculated information. Location and time information may be calculated using three satellites, and errors of the calculated location position and time information may then be amended or changed using another satellite. The position-location module 115 may calculate speed information by continuously calculating a real-time current location.

Referring to FIG. 1, the audio/video (A/V) input unit 120 may provide audio or video signal input to the mobile terminal 100. The A/V input unit 120 may include a camera 121 and a microphone 122. The camera 121 may receive and process image frames of still pictures and/or video. The processed image frames may be displayed on the display 151.

The image frames processed by the camera 121 may be stored in the memory 160 or may be transmitted to the outside through the wireless communication unit 110. At least two or more cameras 121 may be provided in the mobile terminal according to use environment.

The microphone 122 may receive an external audio signal while the mobile terminal is in a particular mode, such as a phone call mode, a recording mode and/or a voice recognition mode. The received audio signal may then be processed and converted into digital data.

The mobile terminal 100, and in particular the AN input unit 120, may include a noise removing algorithm (or noise canceling algorithm) to remove noise generated in the course of receiving the external audio signal. Data generated by the A/V input unit 120 may be stored in the memory 160, utilized by the output unit 150, and/or transmitted via one or more modules of the wireless communication unit 110. At least two or more microphones and/or cameras may also be provided.

The user input unit 130 may generate input data responsive to user manipulation of an associated input device or devices. Examples of such devices may include a keypad, a dome switch, a touchpad (e.g., static pressure/capacitance), a jog wheel and/or a jog switch.

The sensing unit 140 may provide status measurements of various aspects of the mobile terminal 100. For example, the sensing unit 140 may detect an open/close status (or state) of the mobile terminal 100, a relative positioning of components (e.g., a display and a keypad) of the mobile terminal 100, a change of position of the mobile terminal 100 or a component of the mobile terminal 100, a presence or absence of user contact with the mobile terminal 100, and/or an orientation or acceleration/deceleration of the mobile terminal 100.

The mobile terminal 100 may be configured as a slide-type mobile terminal. In such a configuration, the sensing unit 140 may sense whether a sliding portion of the mobile terminal 100 is open or closed. The sensing unit 140 may also sense presence or absence of power provided by the power supply unit 190, presence or absence of a coupling or other connection between the interface unit 170 and an external device, etc.

The sensing unit 140 may include a proximity sensor 141.

The output unit 150 may generate an output relevant to a sight sense, an auditory sense, a tactile sense and/or the like. The output unit 150 may include a display (unit) 151, an audio output module 152, an alarm unit 153 and a haptic module 154.

The display 151 may display (output) information processed by the terminal 100. For example, in case that the terminal is in a call mode, the display 151 may display a user interface (UI) or a graphic user interface (GUI) associated with a call. If the mobile terminal 100 is in a video communication mode or a photograph mode, the display 151 may display a photographed and/or received picture, a UI or a GUI.

The display 151 may include at least one of a liquid crystal display (LCD), a thin film transistor liquid crystal display (TFT LCD), an organic light-emitting diode (OLED), a flexible display, and a 3-dimensional display.

The display 151 may be a light emitting display in terms of a fact that a self light emitting device is used, which is intended to distinguish from a switching panel 155 to be described later.

The display 151 may have a transparent or light-transmissive type configuration to enable an external environment to be seen through. This may be called a transparent display. A transparent OLED (TOLED) may be an example of a transparent display. A backside structure of the display 151 may also have the light-transmissive type configuration. In this configuration, a user may see an object located behind the terminal body through the area occupied by the display 151 of the terminal body.

At least two or more displays 151 may also be provided. For example, a plurality of displays may be provided on a single face of the terminal 100 by being built in one body or spaced apart from the single face. Alternatively, each of a plurality of displays may be provided on different faces of the terminal 100.

If the display 151 and a sensor for detecting a touch action (hereinafter referred to as a touch sensor) are constructed in a mutual-layered structure (hereinafter referred to as a touch screen), the display 151 may be used as an input device as well as an output device. For example, the touch sensor may include a touch film, a touch sheet, a touchpad and/or the like.

The touch sensor may convert a pressure applied to a specific portion of the display 151 or a variation of electrostatic capacity generated from a specific portion of the display 151 to an electric input signal. The touch sensor may detect a pressure of a touch as well as a position and size of the touch.

If a touch input is provided to the touch sensor, signal(s) corresponding to the touch input may be transferred to a touch controller. The touch controller may process the signal(s) and then transfer corresponding data to the controller 180. The controller 180 may therefore know which portion of the display 151 is touched.

Referring to FIG. 1, a proximity sensor 141 may be provided at an inner area of a mobile terminal wrapped by the touch screen or at a vicinity of the touch screen. The proximity sensor 141 is a sensor capable of detecting an object approaching a predetermined detection surface or whether there is an object nearby using an electromagnetic force or infrared, dispensing with a mechanical contact. The proximity sensor has a longer life than that of a contact sensor, such that its utility is higher.

Examples of the proximity sensor may include a transmissive photo sensor, direct reflective photo sensor, a mirror reflective photo sensor, a high frequency oscillating proximity sensor, a capacitive proximity sensor, a magnetic proximity sensor, an infrared proximity sensor and the like. In the case the touch screen is capacitive type, the proximity of a pointer may be detected by changes of electric fields caused by proximity of the pointer. The touch screen (touch sensor) therefore may be classified as a proximity sensor.

For the convenience sake, a case where a pointer is recognized to be proximately placed on a touch screen without touching the touch screen is called a "proximity touch" and a case the pointer completely touches the touch screen is called a "contact touch". The position proximity-touched by the pointer on the touch screen is a position vertically corresponded by the pointer to the touch screen when the pointer proximity-touches the touch screen.

The proximity sensor may detect the proximity touch and proximity touch pattern (e.g., proximity touch distance, proximity touch direction, proximity touch speed, proximity touch time, proximity touch position and proximity touch mobile state, etc.). Information corresponding to the detected proximity touch operation and proximity touch pattern may be displayed on the touch screen.

The audio output module 152 may output audio data that is received from the wireless communication unit 110 in a call signal reception mode, a call mode, a recording mode, a voice recognition mode, a broadcast receiving mode and/or the like. The audio output module 152 may output audio data stored in the memory 160. The audio output module 152 may output an audio signal relevant to a function (e.g., a call signal receiving sound, a message receiving sound, etc.) performed by the mobile terminal 100. The audio output module 152 may include a receiver, a speaker, a buzzer and/or the like.

The alarm unit 153 may output a signal for announcing an event occurrence of the mobile terminal 100. An event occurring in the mobile terminal 100 may include one of a call signal reception, a message reception, a key signal input, a touch input and/or the like. The alarm unit 153 may output a signal for announcing an event occurrence by way of vibration or the like as well as a video signal or an audio signal. The video signal may be outputted via the display 151. The audio signal may be outputted via the audio output module 152. The display 151 or the audio output module 152 may be classified as part of the alarm unit 153.

The haptic module 154 may bring about various haptic effects that can be sensed by a user. Vibration is a representative example for the haptic effect brought about by the haptic module 154. Strength and pattern of the vibration generated from the haptic module 154 may be controllable. For example, vibrations differing from each other may be outputted in a manner of being synthesized together or may be sequentially outputted.

The haptic module 154 may generate various haptic effects including a vibration, an effect caused by such a stimulus as a pin array vertically moving against a contact skin surface, a jet power of air via outlet, a suction power of air via inlet, a skim on a skin surface, a contact of an electrode, an electrostatic power and the like, and/or an effect by hot/cold sense reproduction using an endothermic or exothermic device as well as the vibration.

The haptic module 154 may provide the haptic effect via direct contact. The haptic module 154 may enable a user to experience the haptic effect via muscular sense of a finger, an arm and/or the like. Two or more haptic modules 154 may be provided according to a configuration of the mobile terminal 100.

The memory 160 may store a program for operations of the controller 180. The memory 160 may temporarily store input/output data (e.g., phonebook, message, still picture, moving picture, etc.). The memory 160 may store data of vibration and sound in various patterns outputted in case of a touch input to the touch screen.

The memory 160 may include at least one of a flash memory, a hard disk, a multimedia card micro type memory, a card type memory (e.g., SD memory, XD memory, etc.), a random access memory (RAM), a static random access memory (SRAM), a read-only memory (ROM), an electrically erasable programmable read-only memory, a programmable read-only memory, a magnetic memory, a magnetic disk, an optical disk, and/or the like. The mobile terminal 100 may operate in association with a web storage that performs a storage function of the memory 160 in the Internet.

The interface unit 170 may play a role as a passage to external devices connected to the mobile terminal 100. The interface unit 170 may receive data from an external device. The interface unit 170 may be supplied with a power and then the power may be delivered to elements within the mobile terminal 100.

The interface unit 170 may enable data to be transferred to an external device from an inside of the mobile terminal 100. The interface unit 170 may include a wire/wireless headset port, an external charger port, a wire/wireless data port, a memory card port, a port for coupling to a device having an identity module, an audio input/output (I/O) port, a video input/output (I/O) port, an earphone port and/or the like.

The identity module may be a chip or card that stores various kinds of information for authenticating use of the mobile terminal 100. The identify module may include a user identity module (UIM), a subscriber identity module (SIM), a universal subscriber identity module (USIM) and/or the like. A device provided with the above identity module (hereinafter referred to as an identity device) may be manufactured in the form of a smart card. The identity device may be connected to the mobile terminal 100 via the port.

The interface unit 170 may play a role as a passage for supplying a power to the mobile terminal 100 from a cradle that is connected to the mobile terminal 100. The interface unit 170 may play a role as a passage for delivering various command signals, which are inputted from the cradle by a user, to the mobile terminal 100. Various command signals inputted from the cradle or the power may work as a signal for recognizing that the mobile terminal 100 is correctly loaded in the cradle.

The controller 180 may control overall operations of the mobile terminal 100. For example, the controller 180 may perform control and processing relevant to a voice call, a data communication, a video conference and/or the like. The controller 180 may have a multimedia module 181 for multimedia playback. The multimedia module 181 may be implemented within the controller 180 or may be configured separately from the controller 180.

The controller 180 may perform pattern recognizing processing for recognizing a handwriting input performed on the touch screen as a character an/or recognizing a picture drawing input performed on the touch screen as an image.

The power supply unit 190 may receive an external or internal power and then supply the power required for operations of the respective elements under control of the controller 180.

Embodiments of the present disclosure explained in the following description may be implemented within a recording medium that can be read by a computer or a computer-like device using software, hardware or combination thereof.

According to the hardware implementation, arrangements and embodiments may be implemented using at least one of application specific integrated circuits (ASICs), digital signal processors (DSPs), digital signal processing devices DSPDs), programmable logic devices (PLDs), field programmable gate arrays (FPGAs), processors, controllers, microcontrollers, microprocessors and electrical units for performing other functions. In some cases, embodiments may be implemented by the controller 180.

For a software implementation, arrangements and embodiments described herein may be implemented with separate software modules, such as procedures and functions, each of which may perform one or more of the functions and operations described herein. Software codes may be implemented with a software application written in any suitable programming language and may be stored in memory such as the memory 160, and may be executed by a controller or processor, such as the controller 180.

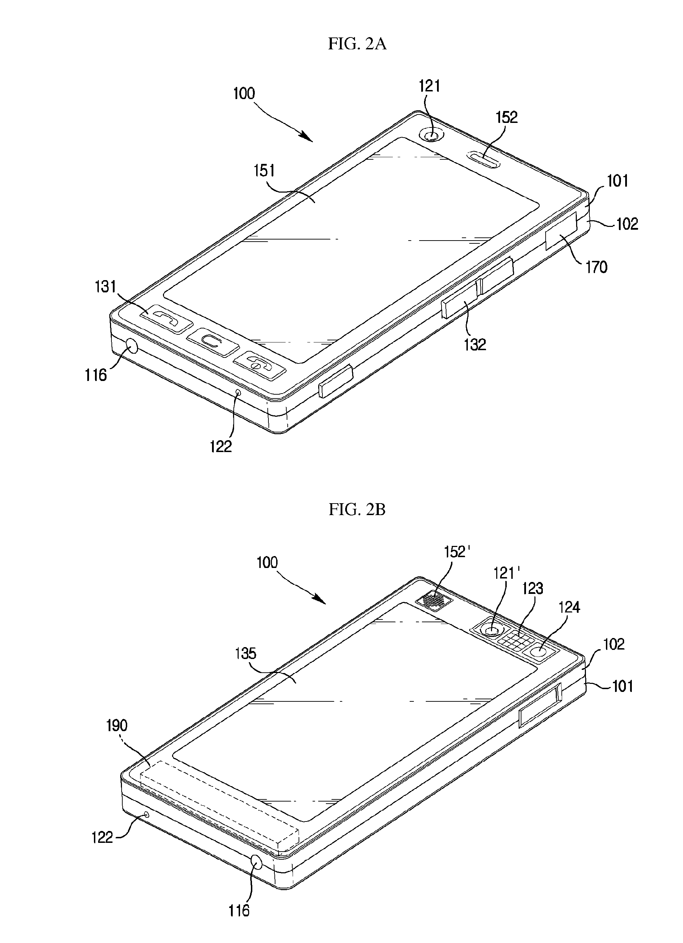

FIG. 2a is a front perspective view of a mobile terminal according to an example of the present invention. Other embodiments, configurations and arrangements may also be provided.

As shown in FIG. 2a, the mobile terminal 100 may include a bar type terminal body. Embodiments of the mobile terminal may be implemented in a variety of different configurations. Examples of such configuration may include a folder-type, a slide-type, a bar-type, a rotational-type, a swing-type and/or combinations thereof.

The body may include a case (casing, housing, cover, etc.) that forms an exterior of the terminal. The case may be divided into a front case 101 and a rear case 102. Various electric/electronic parts may be provided in a space between the front case 101 and the rear case 102. A middle case may be further provided between the front case 101 and the rear case 102.

The cases may be formed by injection molding of synthetic resin or may be formed of metal substance such as stainless steel (STS), titanium (Ti) or the like, for example.

The display 151, the audio output unit 152, the camera 121, user input units 130/131/132, the microphone 122, the interface unit 170 and the like may be provided on the terminal body, and more particularly on the front case 101.

The display 151 may occupy most of a main face of the front case 101. The audio output module 152 and the camera 121 may be provided at an area adjacent to one end portion of the display 151, while the user input unit 131 and the microphone 122 may be provided at another area adjacent to the other end portion of the display 151. The user input unit 132 and the interface unit 170 may be provided on lateral sides of the front case 101 and a rear case 102.

The user input unit 130 may receive a command for controlling an operation of the mobile terminal 100. The user input unit 130 may include a plurality of manipulating units 131 and 132. The manipulating units 131 and 132 may be generally called a manipulating portion and may adopt any mechanism of a tactile manner that enables a user to perform a manipulation action by experiencing a tactile feeling.

Contents inputted by the first manipulating unit 131 or the second manipulating unit 132 may be diversely set. For example, a command such as start, end, scroll and/or the like may be inputted to the first manipulating unit 131. A command for a volume adjustment of sound outputted from the audio output unit 152, a command for switching to a touch recognizing mode of the display 151 or the like may be inputted to the second manipulating unit 132.

FIG. 2b is a perspective diagram of a backside of the mobile terminal shown in FIG. 2a. Other embodiments, configurations and arrangements may also be provided.

As shown in FIG. 2b, a camera 121' may be additionally provided on a backside of the terminal body, and more particularly on the rear case 102. The camera 121' may have a photographing direction that is substantially opposite to a photographing direction of the camera 121 (shown in FIG. 2a) and may have pixels differing from pixels of the camera 121.

For example, the camera 121 may have a lower number of pixels to capture and transmit a picture of user face for a video call, while the camera 121' may have a greater number of pixels for capturing a general subject for photography without transmitting the captured subject. Each of the cameras 121 and 121' may be installed on the terminal body to be rotated and/or popped up.

A flash 123 and a mirror 124 may be additionally provided adjacent to the camera 121'. The flash 123 may project light toward a subject in case of photographing the subject using the camera 121'. If a user attempts to take a picture of the user (self-photography) using the camera 121', the mirror 124 may enable the user to view a user face reflected by the mirror 124.

An additional audio output unit 152' may be provided on the backside of the terminal body. The additional audio output unit 152' may implement a stereo function together with the audio output unit 152 shown in FIG. 2a and may be used for implementation of a speakerphone mode in talking over the terminal.

A broadcast signal receiving antenna 116 may be additionally provided at the lateral side of the terminal body as well as an antenna for communication or the like. The antenna 116 may be considered a portion of the broadcast receiving module 111 shown in FIG. 1 and may be retractably provided on the terminal body.

The power supply unit 190 for supplying a power to the mobile terminal 100 may be provided to the terminal body. The power supply unit 190 may be embedded within the terminal body. Alternatively, the power supply unit 190 may be detachably and attachably connected to the terminal body.

FIG. 2b also shows a touchpad 135 for detecting a touch that is additionally provided on the rear case 102. The touchpad 135 may be configured in a light transmissive type like the display 151. If the display 151 outputs visual information from both faces, the display 151 may recognize visual information via the touchpad 135 as well. The information outputted from both of the faces may be controlled by the touchpad 135. Alternatively, a display may be further provided to the touchpad 135 so that a touch screen may also be provided to the rear case 102.

The touchpad 135 may be activated by interconnecting with the display 151 of the front case 101. The touchpad 135 may be provided in rear of the display 151 in parallel to one another. The touchpad 135 may have a size equal to or smaller than a size of the display 151.

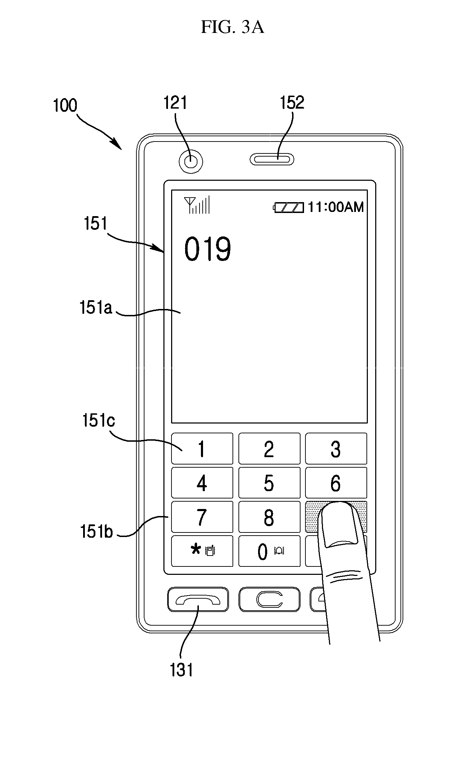

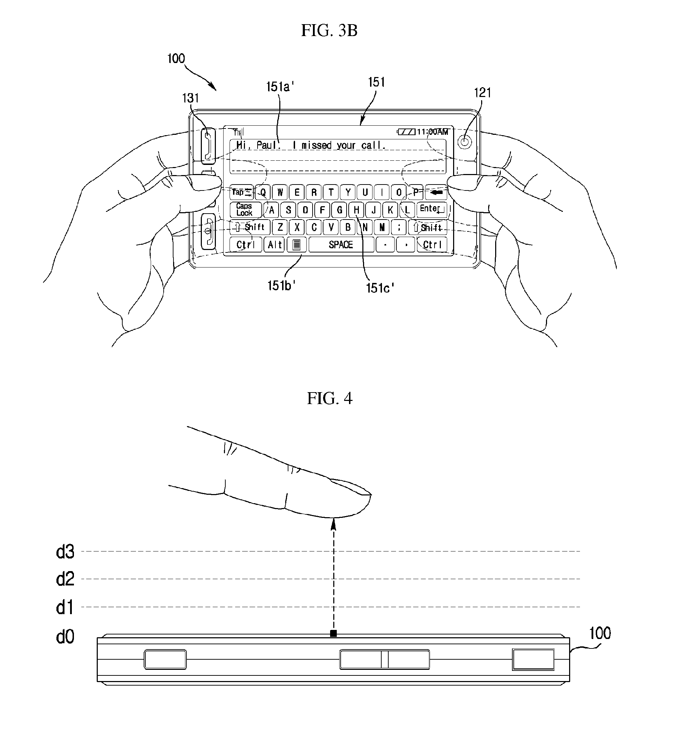

An interacting method between the display 151 and the touch pad 135 will be described with reference to FIGS.3a and 3b.

FIGS.3a and 3b are front views of a mobile terminal for describing an operation status of the mobile terminal according to the present disclosure.

The display 151 may be displayed with various types of visual information. The visual information may be displayed in a type of a letter, a number, a symbol, a graphic or an icon.

At least one of the letter, the number, the symbol, the graphic and the icon may be displayed in a predetermined array to be implemented in the form of a keypad such that this information can be inputted. The keypad is so called a "soft key".

FIG. 3a illustrates an input of touch applied to a soft key through a front surface of body of the mobile terminal.

The display 151 may be operated on an entire area or operated by being divided into a plurality of areas. In the case of the latter, the plurality of areas may be so configured as to be inter-connectively operated.

For example, an upper area and a lower area of the display 151 may be respectively displayed with an output window 151a and an input window 151b. Each of the output window 151a and the input window 151 b is an area respectively allocated for output and input of information. The input window 151 b may be displayed with a soft key 151c indicated with numbers for input of telephone numbers and the like.

When the soft key 151 c is touched, numbers corresponding to the touched soft key may be displayed on the output window 151a. When a first manipulating unit 131 is manipulated, a call connection is attempted to a telephone number displayed on the output window 151 a.

FIG. 3b illustrates an input of touch applied to a soft key through a rear surface of body of the mobile terminal (terminal body). FIG. 3a illustrates the terminal body arranged in a longitudinal way (portrait) while FIG. 3b illustrates the terminal body (landscape) arranged in a crosswise way. The display 151 may be configured to change an output screen according to arrangement direction of the terminal body.

FIG. 3b illustrates a text input mode being operated in a mobile terminal. The display 151 is displayed with an output window 151a' and an input window 151b'. The input window 151b' may be arranged with a plurality of soft keys 151 c' displayed with at least one of a text, a symbol and numbers. The plurality of soft keys 151 c' may be arranged in the form of QWERTY keys or in another format.

When the soft keys 151 c' are touched via the touch pad (135. see FIG. 2b), text, numbers and symbol corresponding to the touched soft key are displayed on the output window 151a'. As noted above, there is an advantage in the touch input via the touch pad 135 over the touch input via the display 151 in that the soft key 151 c' is not hidden by a finger during touch. When the display 151 and the touch pad 135 are transparently formed, fingers positioned at a rear surface of the terminal body can be checked visually, thereby enabling to provide a more accurate touch input.

In addition to the input methods thus disclosed by the exemplary embodiments, the display 151 or the touch pad 135 may be configured to receive the touch via scroll. The user can scroll the display 151 or the touch pad 135 to move a subject displayed on the display 151, e.g., a cursor or a pointer positioned on an icon. Furthermore, When a finger is moved on the display 151 or the touch pad 135, a path along which the finger has moved can be visually displayed on the display 151, which may be very useful in editing an image displayed on the display 151.

To cope with a case where the display 151 and the touch pad 135 are simultaneously touched within a predetermined time scope, a function of the terminal may be executed. The case where the display 151 and the touch pad 135 are simultaneously touched within a predetermined time scope may be a case where a thumb and a first finger of the user are used to clamp the terminal body. The one function may be, for example, activation or inactivation of the display 151 or the touch pad 135.

Now, the proximity sensor 141 will be described in detail with reference to FIG. 4 based on FIG. 1.

FIG. 4 is a schematic conceptual view for explaining a proximity depth of a proximity sensor.

Referring to FIG. 4, When a pointer such as a user finger, a pen or a stylus approaches the touch screen, the proximity sensor 141 arranged nearby or inside the touch screen may detect the approach of the pointer to the touch screen and output a proximity signal.

The proximity sensor 141 may be configured to output mutually different signals based on a distance (hereinafter referred to as "proximity depth") between the proximity-touching pointer and the touch screen. FIG. 4 exemplifies a cross-section of a touch screen disposed with a proximity sensor capable of detecting, for example, 3 proximity depths. It should be apparent that a proximity sensor capable of detecting less than 3 proximity depths or more than 4 proximity depths may be used.

To be more specific, when the pointer completely touches the touch screen (do), the pointer recognizes it as a contact touch. When the pointer is distantly positioned as much as a d₁ distance from the touch screen, the controller 180 recognizes it as a proximity touch of a first proximity depth. When the pointer is distantly positioned more than a d₁ distance but less than d₂ distance from the touch screen, the controller 180 recognizes it as a proximity touch of a second proximity depth. When the pointer is distantly positioned more than a d₂ distance but less than d₃ distance from the touch screen, the controller 180 recognizes it as a proximity touch of a third proximity depth. When the pointer is distantly positioned more than a d₃ distance from the touch screen, the controller recognizes it as a proximity touch being released.

Therefore, the controller 180 can recognize the proximity touch in various input signals based on the proximity depth and proximity position of the pointer, and can perform various operational controls in response to the various input signals.

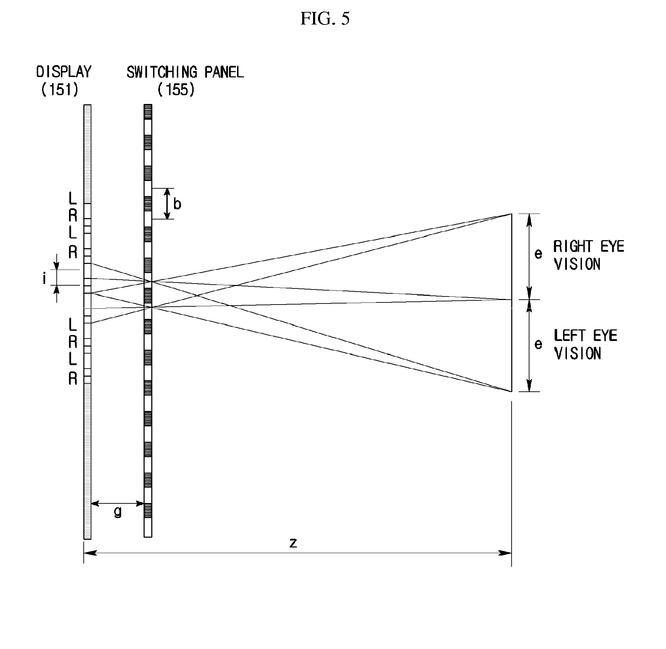

FIG. 5 is a schematic view explaining a principle of a 3-D image display method using binocular disparity according to an exemplary embodiment of the present disclosure.

A method for displaying 3-D images may include a stereoscopic 3-D display that needs spectacles, and an autostereoscopic 3-D display that needs no spectacles. The autostereoscopic 3-D display may be same as the stereoscopic 3-D display in terms of using binocular disparity to thereby provide a 3-D effect or cubic effect, but may be different in terms of using no special spectacles.

Now, one of the principles of the autostereoscopic 3-D display will be describe with reference to FIG. 5. It should be appreciated that the principle of autostereoscopic 3-D display is just one of the examples of displaying the 3-D images.

As illustrated in FIG. 5, in order to display a 3-D image, the display 151 is attached at an upper surface thereof with a switching panel 155. The switching panel 155 is capable of an image being viewed in a 3-D image using the binocular disparity. The binocular disparity means a view difference in which a right eye and a left eye see an object in different visions.

When an image (R) viewed by a right eye through the brain and an image (L) viewed by a left eye through the brain are composed, the composed image may be viewed as a 3-D image. To this end, preparation is made in which one image is divided into an image viewed by a right eye and an image viewed by a left eye, and the left image (L) and the right image (R) are composed in pixel units to be displayed on one screen.

Thereafter, when two eyes are made to divisively see a pixel unit image by the left eye image and a pixel unit image by the right eye image, the image can be viewed as a 3-D image. The method of composing the images may largely utilize an interpolation but it may vary according to methods of forming an image.

The symbol "b" in FIG. 5 indicates a barrier gap of the switching panel 155, "g" indicates a gap between the switching panel 155 and the display, and "z" indicates a distance from a viewing position to the display.

As noted from FIG. 5, When two images are composed based on pixel unit (L, R), the switching panel 155 incident on the vision may be operated with vision of the right eye in a pixel included in the right image, and vision of the left eye in a pixel included in the left image.

When a cubic image (3-D real image) is to be expressed, the switching panel 155 may be turned on to separate an incident vision. Furthermore, a case a 2-D image is to be expressed, the switching panel 155 may be turned off to pass the 2-D image without separating an incident vision. Therefore, the binocular disparity is not separated if the switching panel 155 is turned off.

A partial 2-D display may be enabled by partially turning off the switching panel 155. That is, a turned-on portion of the switching panel 155 is used to show a 3-D image while a turned-off portion of the switching panel 155 is used to show a 2-D image. To be more specific, when the user is desirous of displaying a 2-D image for a predetermined region, the controller 180 may turn off part of the switching panel 155 to enable a 2-D image.

FIG. 5 is a method of displaying in a 3-D image using the binocular disparity based on parallax barrier method. The present disclosure may use other methods such as lenticular method and stereoscopic method (method of viewing in 3-D image using a pair of spectacles) in addition to the above-mentioned parallax barrier method.

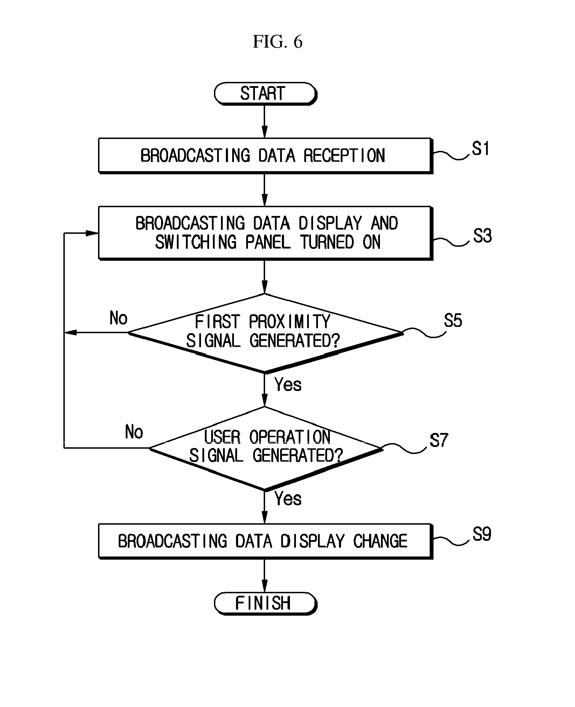

Now, a method for displaying a 3-D broadcasting data in a mobile terminal will be described in detail with reference to FIGS. 6 through 8 according to exemplary embodiments of the present disclosure.

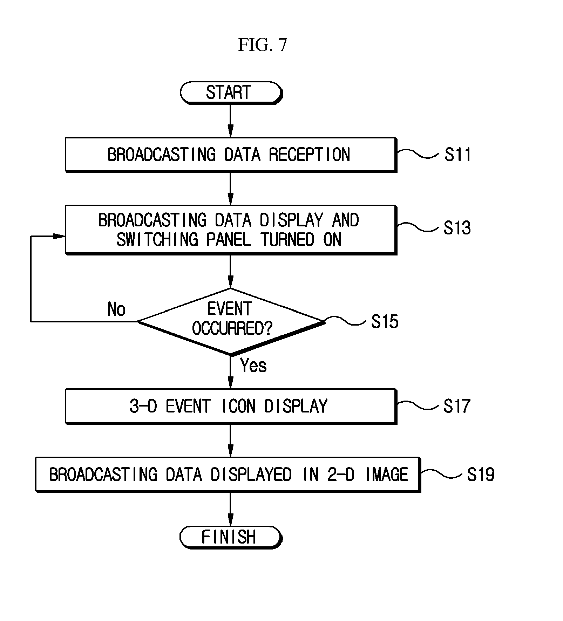

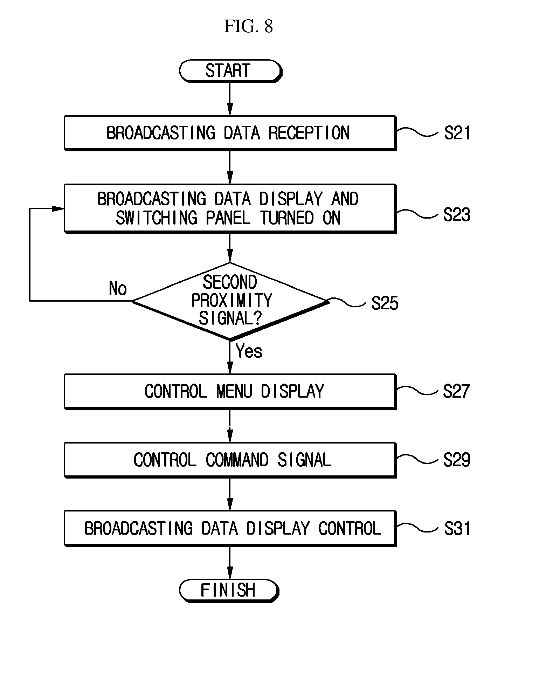

FIG. 6 is a flowchart for describing a method for displaying a 3-D imaged broadcasting data in a mobile terminal according to a first exemplary embodiment of the present disclosure, FIG. 7 is a flowchart for describing a method for displaying a 3-D imaged broadcasting data in a mobile terminal according to a second exemplary embodiment of the present disclosure, and FIG. 8 is a flowchart for describing a method for displaying a 3-D imaged broadcasting data in a mobile terminal according to a third exemplary embodiment of the present disclosure.

### [FIRST EXEMPLARY EMBODIMENT]

FIG. 6 is a flowchart for describing a method for displaying a 3-D imaged broadcasting data in a mobile terminal according to a first exemplary embodiment of the present disclosure.

Referring to FIG. 6, the mobile terminal 100 may receive broadcasting data from the wireless communication unit 110 (S1). The broadcasting data is a 3-D image which may include a left eye image and a right eye image. The received 3-D image is displayed on the display 151. At this time, the switching panel 155 arranged on the display 151 may be turned on (S3).

As illustrated in FIG. 5, the switching panel 155 is such that the left eye image is formed on the user's left eye while the right eye image is formed on the user's right eye, whereby the 3-D imaged broadcasting data is displayed.

When the user finger (pointing device) approaches within a predetermined distance from the proximity sensor 141 of the mobile terminal 100 while the 3-D imaged broadcasting data is displayed, a first proximity signal is generated (S5). The mobile terminal 100 can enter the broadcasting data display change preparatory mode responsive to the first proximity signal to wait for reception of a user operation signal.

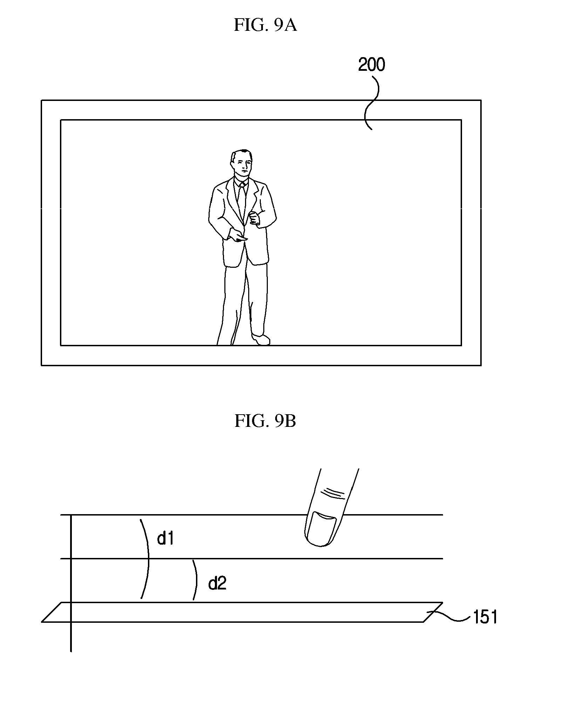

When a user detection signal generated by the proximity sensor or the touch sensor of the mobile terminal 100 is generated (S7), the display of the broadcasting data is changed (S9). The change of display of the broadcasting data will be exemplified in detail with reference to FIGS. 9a through 10c.

According to the first exemplary embodiment of the present disclosure, the user can execute a desired zoom-in or zoom-out function using a one-time gesture, because the broadcasting data under display can be changed by a predetermined operation by the user after entering a display change mode responsive to the proximity signal through the proximity sensor.

### [SECOND EXEMPLARY EMBODIMENT]

FIG. 7 is a flowchart for describing a method for displaying a 3-D imaged broadcasting data in a mobile terminal according to a second exemplary embodiment of the present disclosure.

Referring to FIG. 7, the mobile terminal 100 may receive broadcasting data from the wireless communication unit 110 (S11). The broadcasting data is a 3-D image which may include a left eye image and a right eye image. The received broadcasting data is displayed on the display 151. At this time, the switching panel 155 arranged on the display 151 may be turned on (S13).

As illustrated in FIG. 5, the switching panel 155 is such that the left eye image is formed on the user's left eye while the right eye image is formed on the user's right eye, whereby the 3-D imaged broadcasting data is displayed.

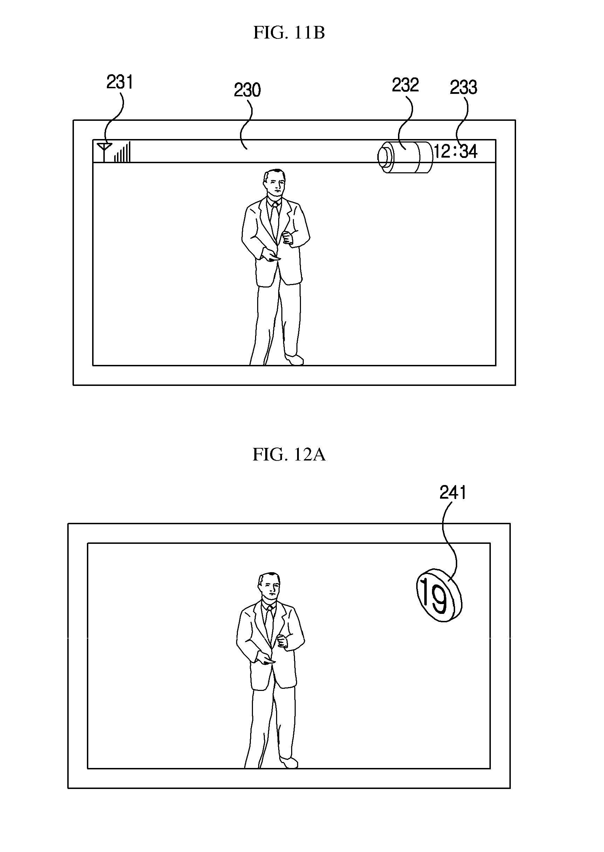

When a predetermined event is generated while the 3-D imaged broadcasting data is displayed, the controller 180 may detect the occurrence of predetermined event, and display a 3-D imaged event icon on the display 151 (S15, S17). The event may include a remaining battery level event, a text message and call signal reception event, and an alarm function event. At this time, in order to display a broadcasting data that is under display in a 2-D image, only one of the left eye image or the right eye image is displayed on the display 151 (S19). The above-mentioned second exemplary embodiment of the present disclosure will be further described in detail with reference to FIGS.12a through 15b. The event may also be a software update event or a calendar event.

According to the second exemplary embodiment of the present disclosure, when a predetermined event is generated while the user is watching a 3-D broadcasting data, an icon notifying the occurrence of the event is displayed in a 3-D image to allow the user to easily know the occurrence of the event.

### [THIRD EXEMPLARY EMBODIMENT]

FIG. 8 is a flowchart for describing a method for displaying a 3-D imaged broadcasting data in a mobile terminal according to a third exemplary embodiment of the present disclosure.

Referring to FIG. 8, the mobile terminal 100 may receive broadcasting data from the wireless communication unit 110 (S21). The broadcasting data is a 3-D image which may include a left eye image and a right eye image. The received broadcasting data is displayed on the display 151. At this time, the switching panel 155 arranged on the display 151 may be turned on (S23).

As illustrated in FIG. 5, the switching panel 155 is such that the left eye image is formed on the user's left eye while the right eye image is formed on the user's right eye, whereby the 3-D imaged broadcasting data is displayed.

When the user finger (pointing device) approaches within a predetermined distance from the proximity sensor of the mobile terminal 100 while the 3-D imaged broadcasting data is displayed, a second proximity signal is generated (S25), where the predetermined distance is a distance different from the predetermined distance for generating the first proximity signal in FIG. 6.

The controller 180 of the mobile terminal 100 controls in such a fashion that the broadcasting data is displayed on the display 151 responsive to the second proximity signal (S27). At this time, the broadcasting control menu is displayed in a 3-D image, and the 3-D broadcasting image under display may be changed to a 2-D image and displayed in such an image. Alternatively, the broadcasting control menu may be displayed in a 2-D image while the 3-D broadcasting image may be maintained. Alternatively, another control function may be executed based on the second proximity signal.

When the user generates a broadcasting display control command signal through the broadcasting control menu (S29), the controller 180 resultantly controls in such a manner that the broadcasting data is displayed (S31).

According to the third exemplary embodiment of the present disclosure, the user can conveniently issue a control command to the broadcasting under display after the broadcasting control menu is displayed by the second proximity signal from the proximity sensor.

Now, a method for displaying a 3-D imaged broadcasting data in the mobile terminal according to an exemplary embodiment of the present disclosure will be described in detail with reference to FIGS. 9a through 15b.

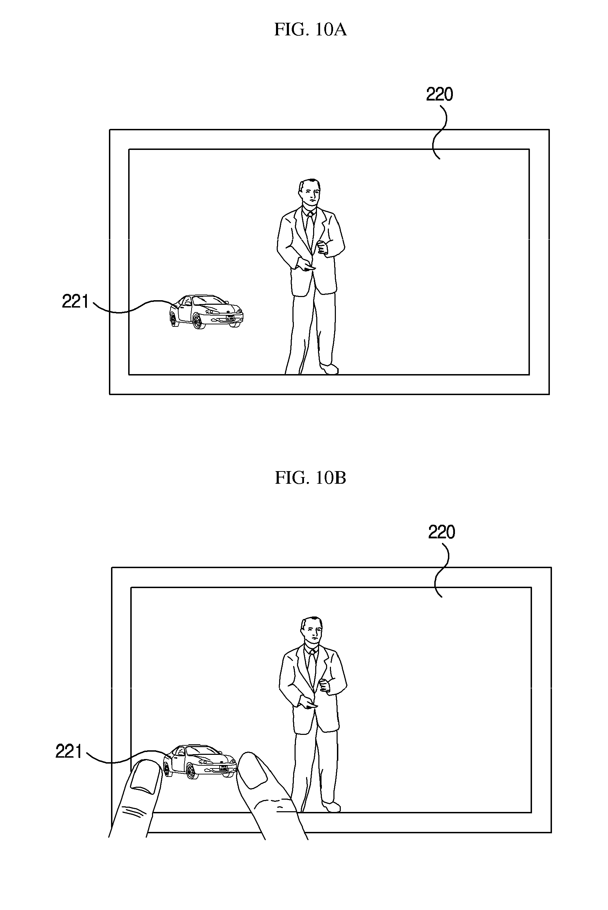

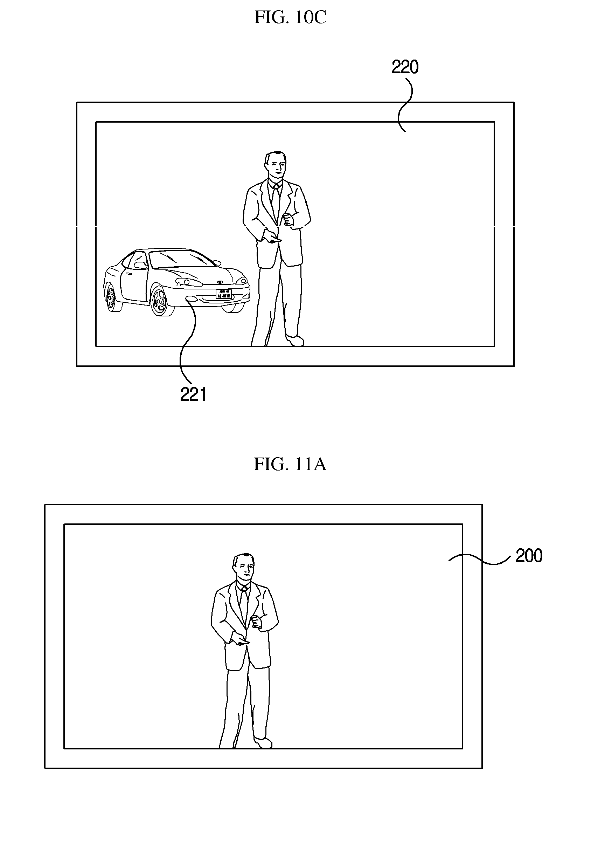

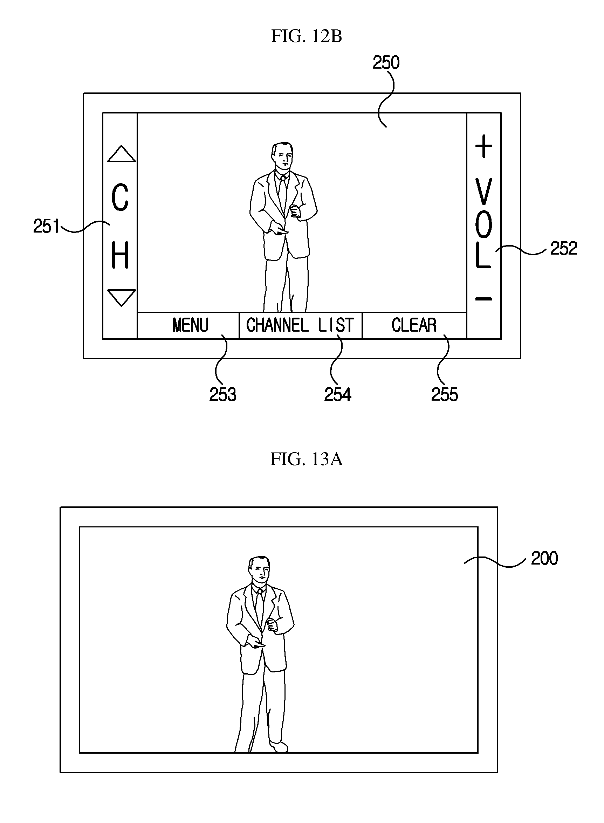

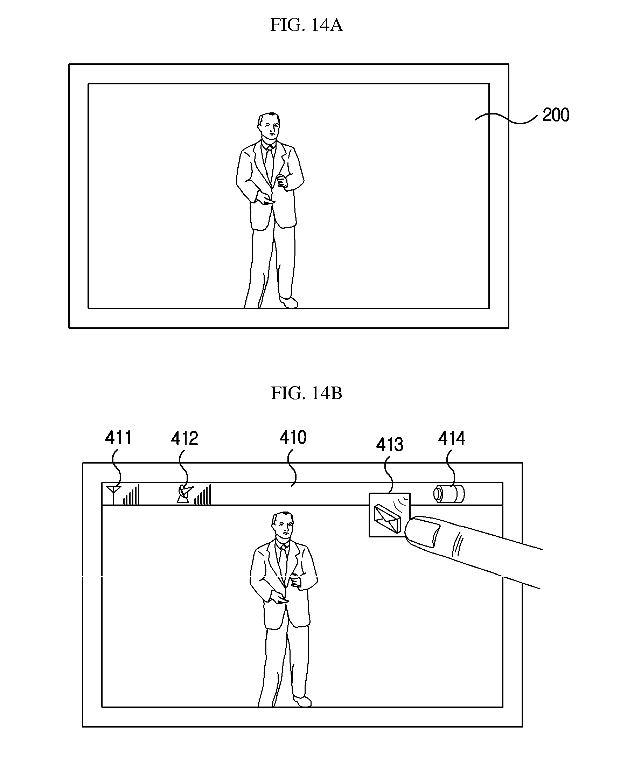

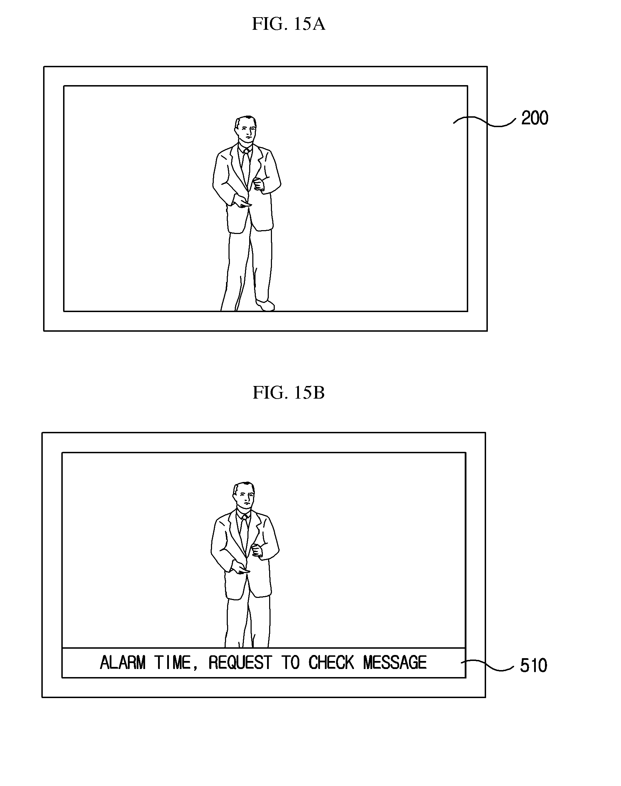

FIGS. 9a - 9d are image views explaining a first example of a mobile terminal for describing a method for displaying a 3-D imaged broadcasting data in the mobile terminal according to an exemplary embodiment of the present disclosure, FIGS. 10a ∼ 10c are image views explaining a second example of a mobile terminal for describing a method for displaying a 3-D imaged broadcasting data in the mobile terminal according to an exemplary embodiment of the present disclosure, FIGS. 11a ∼ 11b are image views explaining a third example of a mobile terminal for describing a method for displaying a 3-D imaged broadcasting data in the mobile terminal according to an exemplary embodiment of the present disclosure, FIGS. 12a ∼ 12b are image views explaining a fourth example of a mobile terminal for describing a method for displaying a 3-D imaged broadcasting data in the mobile terminal according to an exemplary embodiment of the present disclosure, FIGS. 13a ∼ 13c are image views explaining a fifth example of a mobile terminal for describing a method for displaying a 3-D imaged broadcasting data in the mobile terminal according to an exemplary embodiment of the present disclosure, FIGS. 14a - 14d are image views explaining a sixth example of a mobile terminal for describing a method for displaying a 3-D imaged broadcasting data in the mobile terminal according to an exemplary embodiment of the present disclosure, and FIGS. 15a ∼ 15b are image views explaining a seventh example of a mobile terminal for describing a method for displaying a 3-D imaged broadcasting data in the mobile terminal according to an exemplary embodiment of the present disclosure.

FIGS. 9a ∼ 9d are image views explaining a first example of a mobile terminal for describing a method for displaying a 3-D imaged broadcasting data in the mobile terminal according to an exemplary embodiment of the present disclosure.

Displayed on FIG. 9a is a broadcasting screen 200 on which the broadcasting data is displayed on the display 151. When the user issues a broadcasting start command via a predetermined menu, the controller 180 may receive a 3-D imaged broadcasting data through the wireless communication unit 110 and display the data on the display 151. The 3-D imaged broadcasting data may include a left eye image and a right eye image, and a switching panel 155 is displayed on the display 151. When the switching panel 155 is turned on, the left eye image is formed on the user's left eye, and the right eye image is formed on the right eye, whereby display of a 3-D image is completed.

Meanwhile, displayed on FIG. 9b are principles to show how the first and second proximity signals are generated. Referring to FIG. 4, when the user finger, i.e., the pointing device, is positioned between d₁ and d₁ for over a predetermined period of time, a first proximity signal may be generated. When the user finger, i.e., the pointing device, is positioned between the display 151 and d₂ for over a predetermined period of time, a second proximity signal may be generated.

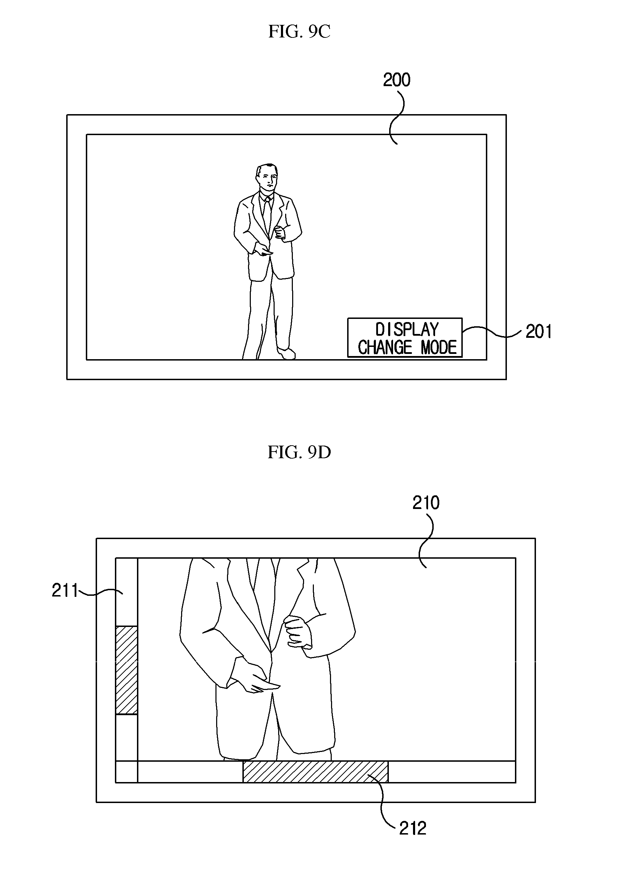

Meanwhile, when the first proximity signal is generated while the broadcasting data is being displayed on the display 151, the display 151 is displayed with a display change mode icon 201 to enter a display change mode, as shown in FIG. 9c. Under this circumstance, zoom-in or zoom-out may be performed in response to a vertical move of the pointing device within the predetermined distance, or the zoom-in or the zoom-out is performed in response to multiple touch operations (i.e., an action of spreading two fingers while touching the display and an action of narrowing two fingers while maintaining the touch with the display). When a flicking signal is generated to a predetermined direction under the zoomed-in state, a display move is implemented to correspond to the predetermined direction.

Meanwhile, when the zoomed-out function is implemented, scroll bars (211, 212) are formed at a bottom end and a lateral end of the display 151, as illustrated in FIG. 9d. The display move of the broadcasting data is implemented by the move of scroll box of the scroll bar.

According to the first example, the display change mode can be entered using the proximity signal and the zoom-in or zoom-out function can be carried out using the proximity move signal or multiple touch signals.

FIGS. 10a ∼ 10c are image views explaining a second example of a mobile terminal for describing a method for displaying a 3-D imaged broadcasting data in the mobile terminal according to an exemplary embodiment of the present disclosure.

Referring to FIG. 10a, the broadcasting data under display is displayed on a broadcasting screen 220. When the user issues a broadcasting start command through a predetermined menu, the controller 180 may receive a 3-D imaged broadcasting data through the wireless communication unit 110 and display the data on the display 151.

The 3-D imaged broadcasting data may include a left eye image and a right eye image, and a switching panel 155 is displayed on the display 151. When the switching panel 155 is turned on, the left eye image is formed on the user's left eye, and the right eye image is formed on the right eye. As a result, the display of a 3-D image is completed. The displayed broadcasting data may be an object 221. The recognition of the object may be determined by the controller 180 responsive to a shade with a backdrop, or may be determined by an object idea information of the received broadcasting data.

When the first proximity signal is generated while the broadcasting data inclusive of the object 221 is displayed on the display 151 as in the first example, the mobile terminal 100 may enter a screen move mode. Under this circumstance, when a finger (pointing device)-spreading touch action is implemented about the object as shown in FIG. 10b, only an object-enlarged broadcasting data is displayed as shown in FIG. 10c. At this time, only the object may be displayed in a 3-D image while others may be displayed in 2-D images. Thereafter, the controller 180 may keep enlarging the recognized object and display the enlarged object.

Furthermore, in recognizing the object 221, the most protrusively significant object may be selected while the broadcasting data inclusive of the object is being displayed on the display 151. As in the first example, when the first proximity signal is generated, the mobile terminal 100 may enter the screen move mode.

As shown in FIG. 10b, when a finger (pointing device)-spreading touch action is implemented about the most protrusively significant object as shown in FIG. 10b, the broadcasting data is displayed in which only the object is enlarged. At this time, only the object may be displayed in a 3-D image while the others may be displayed in 2-D images, as illustrated in FIG.10c. Alternatively, a 3-D depth of the object may be differently displayed from a 3-D depth of the broadcasting data. Furthermore, the user may adjust the 3-D depth of the object while the others may be so controlled as not to trespass the depth of the object.

Meanwhile, when the objects are overlapped, an object that is selected according to the proximity distance may be determined. That is, when a second proximity signal closer to the critical distance is generated, an object that is further behind may be selected, and when a first proximity signal farther from the critical distance is generated, an object that is further upfront may be selected.

According to the second example, a soccer ball or a baseball may be viewed in an enlarged scale when the soccer game or a baseball game is watched on a small screen, to thereby enhance the viewing enjoyment.

FIGS. 11a ∼ 11b are image views explaining a third example of a mobile terminal for describing a method for displaying a 3-D imaged broadcasting data in the mobile terminal according to an exemplary embodiment of the present disclosure.

Referring to FIG. 11a, the broadcasting data under display is displayed on a broadcasting screen 220. When a lack of battery residual level occurs while receiving and viewing the broadcasting data through the wireless communication unit 110, the controller 180 may control in such a way that a battery residual level icon is displayed as a warning to the lack of battery residual level.

That is, as shown in FIG. 11 b, when the battery residual level is shown to be lacking, an indicator region 230 is displayed, and indicator icons (231∼233) are displayed on the display 151. At this time, the battery residual level is displayed in a 3-D image to allow the user to easily know the current event. Furthermore, the 3-D depth of the battery residual level icon 232 may be differently displayed from the 3-D depth of the broadcasting data. Alternatively, the controller 180 may control the display in such a fashion that the 3-D imaged broadcasting data be changed to a 2-D flat image.

When the event-related icon (battery residual level icon) is displayed in a 3-D image, and if the received broadcasting data is automatically stored, and the display of the event-related icon is finished, the stored broadcasting data may be automatically displayed.

Although the third example has exemplified the battery residual level, the example is not limited thereto but the example may be applied to an antenna reception rate failure event, a text message event, a call reception event, an alarm event and a schedule event.

According to the third example, when a predetermined event occurs while the broadcasting is being viewed, the event may be displayed in a 3-D image to allow the user to easily check the occurrence of the event.

FIGS. 12a ∼ 12b are image views explaining a fourth example of a mobile terminal for describing a method for displaying a 3-D imaged broadcasting data in the mobile terminal according to an exemplary embodiment of the present disclosure.

FIG. 12a illustrates a broadcasting screen 240 displayed with an adult broadcasting. In the case of the adult broadcasting, a no-child under 19 (NC-19) icon (241) notifying that the broadcasting is adult broadcasting may be included in the broadcasting data. At this time, the NC-19 icon 241 may be displayed in a 3-D having a depth different from that of the 3-D image broadcasting data. Furthermore, even if the adult broadcasting is displayed in a 2-D flat image, the NC-19 icon 241 may be displayed in a 3-D image.

FIG. 12b illustrates a screen 250 that displays a state where a control menu is further displayed while the broadcasting data is being displayed. The screen 250 may be displayed with a channel menu 251, a volume menu 252, a menu icon 253, a channel list icon 254 and a clear (back to previous screen) icon 255.

That is, when control menus (251-255) are displayed on the display 151 through a predetermined menu while the 3-D imaged broadcasting data as depicted in FIG. 9a is being displayed, the broadcasting being displayed in the 3-D image may be displayed in the 2-D image and the control menus (251-255) may be displayed in the 3-D images. Furthermore, the control menus (251-255) may be displayed in the 2-D images, and the broadcasting data being displayed in the 3-D images are reduced in size to be displayed on a part of the display 151.

The fourth example may be applied to a broadcasting option menu as well as the control menus.

FIGS. 13a ∼ 13c are image views explaining a fifth example of a mobile terminal for describing a method for displaying a 3-D imaged broadcasting data in the mobile terminal according to an exemplary embodiment of the present disclosure.

FIG. 13a illustrates a broadcasting screen 200 displayed with broadcasting data. When the user receives a call signal (during reception of a call request signal from another mobile terminal) while receiving and watching the broadcasting data through the wireless communication unit 110, the controller 180 may control in such a way that phone icons be displayed on the display 151 in order to notify the reception of a call signal.

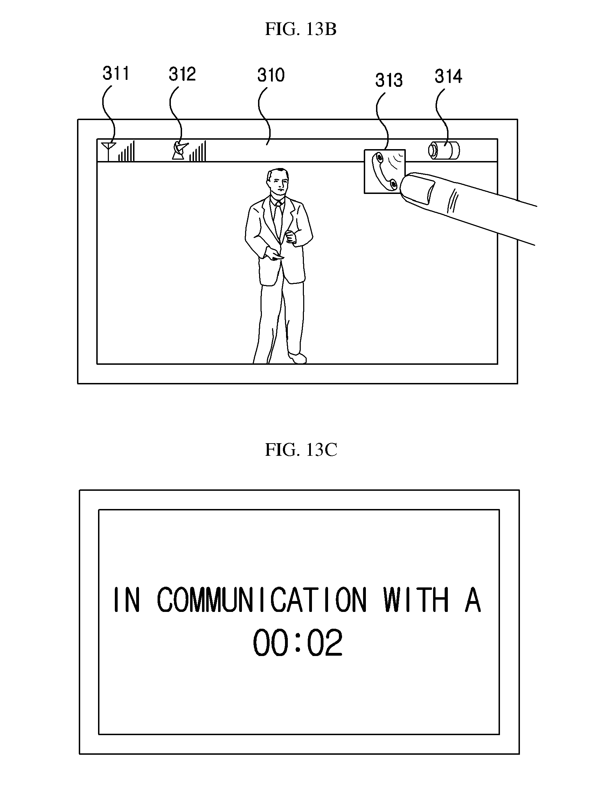

That is, as illustrated in FIG. 13b, when the call signal is received, an indicator region 310 is displayed and indicator icons (311-314) may be displayed on the display 151. At this time, the phone icon 313 may be displayed in a 3-D image. The 3-D imaged broadcasting data may be changed to and displayed in a 2-D image. Furthermore, a 3-D depth of the phone icon 313 may be differently displayed from the 3-D depth of the broadcasting data.

When the user selects the phone icon 313 as shown in FIG. 13c, communication with another mobile terminal may be implemented. At this time, the broadcasting data under reception may be automatically stored in the memory 160, and if the communication ends, a broadcasting data of a screen changed time from FIG. 13b to FIG. 13c may be displayed on the display 151. In this case, the display-completed broadcasting data may be sequentially deleted in order to efficiently utilize the memory 160.

According to the fifth example, when an event such as an event of call signal is generated during reception of the broadcasting data, the event is displayed on the display as an icon and the icon is selected to implement the multiple tasks.

FIGS. 14a ∼ 14d are image views explaining a sixth example of a mobile terminal for describing a method for displaying a 3-D imaged broadcasting data in the mobile terminal according to an exemplary embodiment of the present disclosure.

FIG. 14a illustrates a broadcasting screen 200 displayed with broadcasting data. When a text message is received while the broadcasting data is received and viewed through the wireless communication unit 110, the controller 180 may control in such a way that a text message icon be displayed on the display to notify that the text message has been received.

That is, as shown in FIG. 14b, in the case the text message is received, an indicator region 410 may be displayed to allow indicator icons (411∼414) to be displayed on the display 151. At this time, the text message icon 413 is displayed in a 3-D image. Furthermore, the 3-D imaged broadcasting data may be changed to and displayed in 2-D image. Alternatively, a 3-D depth of the text message icon 413 may be differently displayed from the 3-D depth of the broadcasting data.

In all previously described embodiments, the 3-D depth of various objects may be set by the user during a set-up operation.

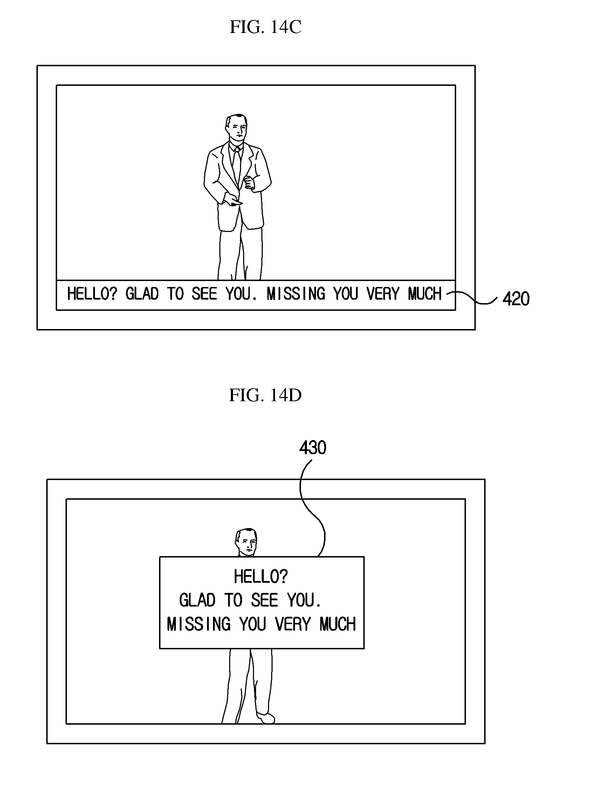

When the user selects the text message icon 413 as shown in FIG. 14c, contents of the text message may be displayed in a subtitle broadcasting (420. flowing texts) at the bottom end of the display 151. Alternatively, as shown in FIG. 14d, a text message window 430 may be displayed in a 3-D image in an overlapping method. At this time, the broadcasting data under reception may be automatically stored in the memory 160, and the text message window is closed to allow the broadcasting data from the screen change time to be displayed on the display 151. In this case, the display-completed broadcasting data may be sequentially deleted in order to efficiently utilize the memory 160.

According to the sixth example, when an occurrence of text message reception event is generated during the reception of the broadcasting data, the occurrence is displayed as an icon, where the icon is selected to allow implementing the multiple tasks.

FIGS. 15a ∼ 15b are image views explaining a seventh example of a mobile terminal for describing a method for displaying a 3-D imaged broadcasting data in the mobile terminal according to an exemplary embodiment of the present disclosure.

FIG. 15a illustrates a broadcasting screen 200 displayed with broadcasting data. When a pre-set alarm time is sounded while the user receives and views the broadcasting data through the wireless communication unit 110, an alarm function is implemented. At this time, the controller 180 may display an alarm notifying message 510 in a flowing style as shown in FIG. 15b. The alarm notifying message 510 may be displayed in a 3-D image while the broadcasting data may be changed to and displayed in a 2-D image.

According to the seventh example, the generation of an alarm event can be simply advised to the user's convenient visual notice during reception of the broadcasting data.

The above-mentioned method for displaying broadcasting data in a mobile terminal and a mobile terminal thereof may, however, be embodied in many different forms and should not be construed as limited to the embodiments and examples set forth herein. While particular features or aspects may have been disclosed with respect to several embodiments, such features or aspects may be selectively combined with one or more other features and/or aspects of other embodiments as may be desired.

The above-described methods can be implemented in a program recorded medium as computer-readable codes. The computer-readable media may include all kinds of recording devices in which data readable by a computer system are stored. The computer-readable media include ROM, RAM, CD-ROM, magnetic tapes, floppy discs, optical data storage devices, and the like for example and also include carrier-wave type implementations (e.g., transmission via Internet).

Although the present disclosure has been described with reference to a number of illustrative embodiments thereof, it should be understood that numerous other modifications and embodiments can be devised by those skilled in the art that will fall within the scope of the principles of this disclosure. More particularly, various variations and modifications are possible in the component parts and/or arrangements of the subject combination arrangement within the scope of the disclosure, the drawings and the appended claims. In addition to variations and modifications in the component parts and/or arrangements, alternative uses will also be apparent to those skilled in the art.

## Claims

1. A method for displaying broadcasting data on a display of a mobile terminal, comprising:
displaying (S3) the broadcasting data, including displaying at least a part of the broadcasting data as a 3-D image;
generating (S5) a first proximity signal when an objet is sensed within a predetermined distance from the mobile terminal by a proximity sensor of the mobile terminal; and
changing (S9) the display of the broadcasting data responsive to a predetermined user detection signal generated (S7) by one of the proximity sensor and a touch sensor of the mobile terminal.

2. The method of claim 1, wherein the first proximity signal is generated when a pointing device is sensed in a position within a predetermined distance from the proximity sensor for a predetermined time.

3. The method of claim 1 or 2, wherein the step of changing the display comprises one of:
changing a zoom parameter of the display;
changing at least a part of a 3-D display to 2-D;
changing at least part of a 2-D display to 3-D; and
displaying 2-D or 3-D control icons for controlling an audio, video or channel of the display.

4. The method of any one of claims 1 to 3, further comprising:
sensing (S15) a predetermined event and displaying (S17) a corresponding event-notifying icon as a 3-D icon.

5. The method of claim 4, wherein the predetermined event is one of a battery level event, a received text event, a received call event, a calendar event, a broadcast content label event, and a software update event.

6. The method of claim 4 or 5, further comprising one of:
replacing at least a portion of the 3-D image with a 2-D image upon sensing the predetermined event; and
displaying one of 2-D text and 3-D text associated with the predetermined event.

7. The method of any one of claims 1 to 6, further comprising:
generating (S25) a corresponding second proximity signal based on a corresponding second proximity sensor event; and
displaying (S27) a control menu based on the second proximity signal.

8. The method of claim 7, further comprising:
controlling (S31) the display of the broadcasting data responsive to a direct touch to the displayed control menu.

9. The method of any one of claims 1 to 6, further comprising:
generating a second proximity signal based on a second proximity sensor event relative to a displayed 3-D icon; and
executing a predetermined function based on the second proximity signal.

10. The method of any one of claims 1 to 9, further comprising:
controlling a 3-D depth of the 3-D image responsive to a user set-up command.

11. A mobile terminal, comprising:
a wireless communication unit (110);
a display (151) including a 3D/2D switching panel;
a proximity sensor (141); and
a controller (180) operatively connected to the wireless communication unit, the display and the proximity sensor, wherein the controller is configured to
display (S1) broadcasting data by displaying at least a part of the broadcasting data as a 3-D image,
generate (S5) a first proximity signal when an objet is sensed within a predetermined distance from the mobile terminal by a proximity sensor of the mobile terminal; and
change (S9) the display of the broadcasting data responsive to a predetermined user detection signal generated (S7) by one of the proximity sensor and a touch sensor of the mobile terminal.

12. The mobile terminal of claim 11, wherein the controller is further configured to perform the steps of the method for displaying broadcasting data according to any one of claims 2 to 10.
